# EUROPÄISCHE PATENTSCHRIFT

(11) **EP 2 264 448 B1**
(45) Veröffentlichungstag und Bekanntmachung des Hinweises auf die Patenterteilung: **09.11.2016**
(21) Anmeldenummer: 09163218.2
(22) Anmeldetag: 19.06.2009
(51) Int. Cl.: G01N 31/22, G01N 21/77, G01N 21/78

(54) **Verwendung einer Zusammensetzung als Sauerstoffindikator für parenterale und enterale Applikationsformen**
Use of a composition as oxygen indicator for parenteral and enteral application forms
Utilisation d'une composition en tant qu'indicateur d'oxygène pour formes d'application parentérales et entérales

(43) Veröffentlichungstag der Anmeldung: 22.12.2010
(73) Patentinhaber: B. Braun Melsungen AG, 34212 Melsungen (DE)
(72) Erfinder: Krüger, Dr. Volker, 34329 Nieste (DE)
(74) Vertreter: dompatent von Kreisler Selting Werner - Partnerschaft von Patent- und Rechtsanwälten mbB

(56) Entgegenhaltungen:
- WO-A1-03/021252
- WO-A1-2006/135344
- WO-A1-2007/018301
- DE-A1- 2 812 870
- JP-A- 2006 090 773
- US-A- 4 526 752

## Beschreibung

Die vorliegende Erfindung betrifft die Verwendung einer Zusammensetzung als Sauerstoffindikator, bei welchem die Anwesenheit oder Abwesenheit von Sauerstoff durch einen Farbwechsel sichtbar gemacht wird. Die erfindungsgemäße Verwendung ist in Anspruch 1 definiert.

Im medizinischen Bereich sind viele Umverpackungen aus Glas durch Umverpackungen aus einem Kunststoff ersetzt worden. Kunststoffumverpackungen sind leichter und häufig auch billiger. Im Bereich der parenteralen und enteralen Therapie ist es häufig notwendig, dass die Inhaltsstoffe von der Umgebungsluft, vor allem von Sauerstoff, getrennt sind. Kunststoffe sind mehr oder weniger luft- und damit sauerstoffdurchlässig. Durch den Kontakt mit Sauerstoff können medizinische Produkte zerfallen und ihre Wirksamkeit verlieren, oder es können unter Umständen unerwünschte Abbauprodukte auftreten.

Es besteht demnach die Notwendigkeit zu kontrollieren, dass kein Sauerstoff zu dem luftempfindlichen Produkt vorgedrungen ist. Dieser Nachweis sollte schnell und einfach, am besten ohne Hilfsmittel, durchzuführen sein.

Im Stand der Technik sind Indikatoren bekannt, welche beim Kontakt mit Sauerstoff ihre Farbe ändern. Häufig handelt es sich um Metalle oder Metallverbindungen, insbesondere Eisen(II)-Verbindungen. So wird in EP 0 922 219 B1 und US 6,093,572 A eine farbige Zusammensetzung aus einer Pyrogallol-Verbindung, einem Eisen-II-Salz und einer organischen Säure beschrieben. Die Pyrogallol-Verbindung ist natürliches oder synthetisch oder halbsynthetisch hergestelltes Tannin. In der Anwesenheit von Sauerstoff färbt sich die ursprünglich gelbe Zusammensetzung schwarz. Der Farbumschlag beruht auf einer Oxidation von Eisen-II- zu Eisen-III, welches dann mit dem aromatischen System von Tannin reagiert.

Ebenfalls eine Farbzusammensetzung bestehend aus einer Eisen(II)- und einer Pyragollol-Verbindung beschreiben US 6,627,443 B1 und US 6,399,387 B1. Der Farbumschlag des hier beschriebenen Sauerstoffindikators kann durch eine Reduktion der Eisenionen rückgängig gemacht werden.

Die WO 2007/059900 A1 betrifft einen Sauerstoff-Scavenger/-Indikator, der mindestens ein Sauerstoff-Sorbens aus einem Metall oder einer Metallverbindung enthält, das/die durch Sauerstoff in eine höhere Oxidationsstufe überführbar ist. Darüber hinaus sind weiterhin ein Komplexbildner oder Redox-Indikator für das Sorbens sowie ein Elektrolyt enthalten. Die Indikatorwirkung wird durch eine Änderung der physikalischen Eigenschaften des Sauerstoff-Sorbens bewirkt, die durch Komplexbildung und/oder Wechselwirkung mit dem Redox-Indikator ausgelöst wird.

JP 56132560 beschreibt eine Sauerstoff-nachweisende Zusammensetzung. Diese Zusammensetzung ist einfach handhabbar und hat einen deutlichen Farbunterschied als Reaktion auf die Anwesenheit oder Abwesenheit von Sauerstoff. Ein solcher Stoff enthält eine Verbindung mit einem Oxazin-Kern, eine Eisenverbindung, Magnesium-Silikate und Wasser oder Alkohol. In der Anwesenheit von Sauerstoff färbt sich die Mischung rot-violett, in Abwesenheit von Sauerstoff weiß. Der Wechsel im Farbton ist reversibel.

Neben Metallionen finden auch Redox-Farbstoffe Verwendung als Sauerstoffindikatoren. Es sind mehrere Farbstoffe bekannt, die in ihrer reduzierten Form, der Leuko- oder Dihydroform, eine andere Farbe besitzen als in ihrer oxidierten Form. Man unterscheidet zwischen zweifarbigen Indikatoren wie Ferroin (Farbumschlag blau - rot) und einfarbigen Indikatoren wie Neutralrot (farblos - rot). Der Farbumschlag ist in allen Fällen reversibel.

So befasst sich US 2007/0031976 A1 mit einem Sauerstoffindikator, der die Anwesenheit von Sauerstoff in einer Verpackung anzeigt, welche eine medizinische Zusammensetzung enthält. Der Indikator besteht aus einer Zusammensetzung, wobei die einzelnen Bestandteile als sicher in der Verwendung mit medizinischen Produkten eingestuft wurden. Als Redox-Farbstoff fungiert Indigo-Carmin, welches bei einem pH-Wert von 9,0 bis 9,75 mit Cellulose, einem Reduktionsmittel und Wasser vermischt wird.

JP 56065072 beschreibt eine Sauerstoff-nachweisende Verbindung. Als Redox-Farbstoff dient eine Verbindung mit einem Oxazin-Grundgerüst. Außerdem beinhaltet die Verbindung Glucose, mindestens eine Verbindung ausgewählt aus einem Hydroxid, einem Silikat eines Akali- oder Erdalkalimetalls und Aluminiumhydroxid. Der Farbumschlag zwischen oxidierter und reduzierter Form ist reversibel.

EP 0524021 B1 beschäftigt sich mit einem Sauerstoffindikator, der mindestens eine organische Verbindung mit drei oder mehr Kohlenstoffatomen sowie mindestens einer primären Aminogruppe und mindestens einer Hydroxygruppe und mindestens ein Farbstoff ausgewählt aus der Gruppe Thiazinfarbstoff, Indigofarbstoffe und Mischungen hiervon enthält. Des Weiteren ist zusätzlich mindestens eine organische oder anorganische Säure enthalten. Diese Patentschrift beschäftigt sich mit einem Sauerstoffindikator, der die Anwesenheit oder Abwesenheit von Sauerstoff in einer Gasphase anzeigt, welche Lebensmittel, elektronische Teile, elektrische Produkte, welche elektronische Teile, metallische Teile oder Produkte mit metallischen Anteilen schützen soll.

Die deutsche Offenlegungsschrift DE 2812870A1 offenbart einen Sauerstoffindikator zur Überwachung von sauerstofffreien Verpackungen von z.B. Nahrungsmitteln auf der Basis von Methylenblau, Glukose und Natriumhydroxid.

Der Sauerstoffindikator aus EP 1312918 A2 enthält Schichtsilikate, kationische, grenzflächenaktive Stoffe, einen organischen Farbstoff, ein Reduktionsmittel und gegebenenfalls eine basische Verbindung. Die Zusammensetzung ermöglicht durch einen reversiblen Farbumschlag die Kontrolle über An- oder Abwesenheit von Sauerstoff oder die Konzentration an Sauerstoff.

Die US 6,676,901 B1 betrifft einen Sauerstoffindikator welcher ein sauerstoffanzeigendes Mittel enthält, beinhaltend ein Substrat und eine sauerstoffanzeigende Zusammensetzung, welche auf der Oberfläche des Substrats fixiert ist. Diese Schrift beinhaltetet außerdem ein Päckchen, welches Sauerstoff bindet und eine sauerstoffanzeigende Funktion hat, an welches der Sauerstoffindikator geklebt werden kann. Die Schrift betrifft weiterhin ein Verfahren und eine Vorrichtung um den Sauerstoffindikator an einem Objekt zu befestigen.

Aufgabe der vorliegenden Erfindung ist demnach die Bereitstellung eines licht- und hitzeresistenten Sauerstoffindikators, bei dem ein Farbumschlag mit dem Auge erkennbar ist. Der Farbumschlag sollte zügig vonstatten gehen, jedoch nicht innerhalb weniger Sekunden. Findet der Indikator Anwendung in einer Packung, so sollte auch nach dem Öffnen der Packung noch für einige Minuten zu erkennen sein, ob der Indikator schon vor dem Öffnen mit Sauerstoff in Kontakt gekommen war oder nicht. Der Indikator soll weiterhin so gestaltet sein, dass das sauerstoffempfindliche Produkt sichtbar bleibt. Insbesondere ist ein Redoxfarbstoff als Sauerstoffindikator angestrebt, welcher im reduzierten Zustand farblos ist, in der oxidierten Form eine intensive Farbe aufweist, so dass eine Anwesenheit von Sauerstoff mit dem bloßen Auge deutlich erkennbar ist.

Überraschenderweise löst die vorgenannte Aufgabe eine Mischung aus Resorufin, und/oder Toluidinblau als organischen Redoxfarbstoff, einem oder mehreren Polyolen, insbesondere Glycerol, und Wasser, eingearbeitet in ein oder mehreren Hilfsstoffe. Durch die Verwendung des Polyols wird Wasser in dem Sauerstoffindikator gebunden. In einer bevorzugten Ausführungsform enthält der so definierte Sauerstoffindikator außerdem einen organischen oder anorganischen Puffer, insbesondere einen Phosphat- und/oder Citratpuffer.

Bevorzugt wird mit einer ein Molaren Pufferlösung gearbeitet, so dass sich eine Konzentration von 0,001 bis 2 Mol, insbesondere 0,01 bis 1 Mol bezogen auf den Sauerstoffindikator ergibt.

Enthält der Sauerstoffindikator Resorufin als organischen Redoxfarbstoff, so wird der pH-Wert auf einem Bereich von 6 bis 10, bevorzugt 7 bis 9, besonders bevorzugt 7,5 bis 8,5 eingestellt. Liegt Toluidinblau als Redoxfarbstoff vor, so wird der pH-Wert in einem Bereich von 2 bis 6, bevorzugt 3 bis 5, besonders bevorzugt 3,5 bis 4,5 eingestellt.

Erfindungsgemäß wird der Sauerstoffindikator vorzugsweise in einen Hilfsstoff eingearbeitet. Als mögliche Hilfsstoffe finden Methylcellulose, Gelatine und/oder HES Verwendung. Sie **wirken** leicht reduzierend,
so dass der Redoxfarbstoff in seiner oxidierten Form eingesetzt werden kann und erst vor der Verwendung als Sauerstoffindikator reduziert werden kann.
HES können mit unterschiedlichen Molekülgrößen verwendet werden. Ein erfindungsgemäßer Sauerstoffindikator kann mit HES 130 aber auch mit HES 200 und/oder HES 450 hergestellt werden. Die Zahl beschreibt die molare Masse der entsprechenden Hydroxyethylstärke in Kilo-Dalton.

Des Weiteren kann ein erfindungsgemäßer Sauerstoffindikator auf ein Trägermaterial, insbesondere Ionentauscher, Papier oder Folie, aufgebracht werden. In einer bevorzugten Ausführungsform wird ein Anionen- oder Kationentauscher auf Polymerbasis oder aus einem polymeren Kohlenhydratderivat verwendet. Ein solcher Ionentauscher wird zuerst mit einem Puffer gespült, anschließend wird der Sauerstoffindikator aufgetragen. Die Verwendung eines Ionentauschers als

Trägermaterial ermöglicht die Einstellung des pH-Wertes über den Ionentauscher selbst, wodurch eine weitere Pufferzugabe nicht mehr notwendig ist.

Ein erfindungsgemäßer Sauerstoffindikator kann in Form einer Tablette, Kapsel oder als Gel vorliegen. Diese können wiederum in eine separate Umverpackung, bevorzugt einen Beutel oder Blister, eingebracht werden. Durch die Dicke des Materials aus dem die Umverpackung besteht, kann die Sauerstoffdurchlässigkeit kontrolliert und entsprechend der Verwendung angepasst werden.

Grundsätzlich gibt es drei unterschiedliche Varianten den Farbstoff einzuarbeiten:
1. Der Farbstoff wird zur Leuko- oder Dihydroverbindung reduziert und unter Inertgas weiterverarbeitet.
2. Der Indikator wird mit Schutzgruppen in der reduzierten Form stabilisiert und eingearbeitet. Die Aktivierung geschieht im Endprodukt vor, während oder nach einer Wärmebehandlung des Endproduktes durch Abspaltung der Schutzgruppe.
3. Die Indikatorsubstanz wird in der oxidierten Form eingearbeitet. Die Aktivierung geschieht im Endprodukt vor, während oder nach einer Wärmebehandlung des Endproduktes durch Reduktion.

Wird der Redoxfarbstoff in der reduzierten Form eingebracht, so müssen alle weiteren Verfahrensschritte unter Inertgas in einer sauerstofffreien Atmosphäre geschehen. Zur Reduktion des Farbstoffes eignen sich Reduktionsmittel mit einem höheren Reduktionspotenzial als der entsprechende Farbstoff selbst, insbesondere Glucose, Natriumdisulfit, Zink, Mangan(II)-Chlorid, N-Acetylcystein und/oder Ascorbinsäure. Die Reduktionsmittel werden vor der Verwendung des reduzierten Farbstoffs als Sauerstoffindikator abgetrennt.

Zur Stabilisierung der reduzierten Form des Redox-Farbstoffs können Schutzgruppen eingebracht werden. Diese spalten sich bei einer Temperaturbehandlung ab. Bevorzugt handelt es sich hierbei um eine Benzylgruppe.

Wird der Redoxfarbstoff in seiner oxidierten Form eingebracht, so kann die weitere Bearbeitung unter Normalbedingungen erfolgen. Eine Reduktion des Farbstoffes erfolgt dann während einer Temperaturbehandlung, beispielsweise einer Sterilisation.

Durch Aufbringung auf Trägermaterialien oder Einarbeitung in Hilfsstoffe kann der Farbstoff immobilisiert werden. Möglich ist die Aufbringung des Sauerstoffindikators als Schriftzug auf Folie oder Papier. Dieser Schriftzug ist in Abwesenheit von Sauerstoff nicht oder nur schwer sichtbar. Sollte jedoch der Indikator mit Sauerstoff in Kontakt kommen, wird der Schriftzug sichtbar. Eine Verwechslung von Farben wird somit vermieden.

Der fertige Sauerstoffindikator kann erfindungsgemäß aus kleinen materialbefüllten Beuteln, zum Beispiel in Kissenform, bestehen. Eine weitere Variante ist die Befüllung eines Blisters oder einer gestanzten oder tiefgezogenen Folie, in welcher der Sauerstoffindikator bei Oxidation seine Farbe ausbilden kann. Die Sauerstoffdurchlässigkeit der Umverpackung kann den Bedürfnissen angepasst werden. Durch die Dicke einer verwendeten Folie kann die Sauerstoffpermeabilität beeinflusst werden.

In einer weiteren Ausführungsform findet der Sauerstoffindikator in Form von Tabletten oder Kapseln Anwendung. Die Hülle der Kapsel ist bevorzugt durchsichtig. Bevorzugt handelt es sich um eine Gel-gefüllte Kapsel, in der der Sauerstoffindikator in Gelatine oder HES eingebracht wurde.

Ein erfindungsgemäßer Sauerstoffindikator kann zur Überwachung von parenteralen und enteralen Applikationsformen verwendet werden, insbesondere im räumlichen Bereich zwischen einem Beutel zur parenteralen und enteralen Ernährung und einem Umbeutel.

Bei der Verwendung von Resorufin als Redoxfarbstoff findet in einem erfindungsgemäßen Sauerstoffindikator ein Farbumschlag von farblos hin zu rot-violett statt. Bei der Oxidation von Toluidinblau verfärbt sich der ursprünglich farblose Sauerstoffindikator blau. Durch Veränderung der Konzentration der Hilfsstoffe, insbesondere Gelatine und/oder Hydroxyethylstärken, kann der Farbton variieren. Im Falle von Toluidinblau erfolgt durch Oxidation beispielsweise eine Farbveränderung nach grün oder lila bei hohen Gelatinekonzentrationen. In der reduzierten Form ist ein solcher Sauerstoffindikator leicht gelb. Beide Formen sind in ihrer Farbe mit dem bloßen Auge sehr gut voneinander zu unterscheiden. Erfindungsgemäß kann ein erfindungsgemäßer Sauerstoffindikator in dem räumlichen Bereich zwischen einem Beutel zur parenteralen und enteralen Ernährung und einem Umbeutel eingesetzt werden. Zusätzlich kann in diesen Bereich noch ein Sauerstoffabsorber eingesetzt werden. Dieser bindet eventuell vorhandenen freien Sauerstoff und verlängert damit sowohl die Haltbarkeit der parenteralen und interalen Applikationsform als auch die Wirksamkeit des Sauerstoffindikators.

In den folgenden Beispielen soll der erfindungsgemäße Indikator erläutert jedoch nicht ausschließend beschrieben werden.

### Ausführungsbeispiele

Von den Redoxfarbstoffen wurden folgende Lösungen hergestellt: Lösungen mit Methylenblau stellen Referenzbeispiele dar.

Resorufin wurde in einer Konzentration von 1% in destilliertem Wasser gelöst. Die Lösung wurde bei Bedarf mit destilliertem Wasser verdünnt. Die entsprechenden Konzentrationen sind in den jeweiligen Beispielen angegeben.

Methylenblau wurde in einer Konzentration 1% in destilliertem Wasser gelöst.

Toluidinblau wurde in einer Konzentration 1% in destilliertem Wasser gelöst.

Diese wurden in den folgenden Beispielen eingesetzt.

### Beispiel 1

### Ionenaustauscher Amberlite^{®} CG-50 I

Jeweils drei Spatelspitzen Ionenaustauscher CG-50 I wurden mit WFI (water for injection) gewaschen und überstehende Lösung abdekantiert. Anschließend wurde der Ionenaustauscher jeweils mit 1 %iger Methylenblaulösung, 1 %iger Toluidinblaulösung oder 0,001 %iger Resorufinlösung versetzt und verrührt. Das Gemisch wurde einige Zeit stehen gelassen und hin und wieder umgerührt. Danach wurde jedes Gemisch mit Hilfe eines Büchnertrichters mit eingelegtem Filterpapier filtriert. Der noch feuchte Ionenaustauscher wurde anschließend in Probegläschen umgefüllt und verschlossen.

Von jedem Ionenaustauscherindikatorgemisch wurde eine Spatelspitze in einen Umbeutel gefüllt und mit einem Absorberbeutel eingeschweißt. Nach einem Zeitraum von 14 Tagen waren alle Sauerstoffindikatoren nach wie vor entfärbt.

### Beispiel 2

10 g eines Dowex^{®} 1-X8 Ionenaustauschers wurden dreimal mit WFI aufgeschwemmt und anschließend in einer Filternutsche abgenutscht. 50 g einer 0,001 %igen Resorufinlösung mit einem pH-Wert von 8 wurden über den Ionenaustauscher geschichtet. Die Mischung wurde mehrmals verrührt und anschließend abgenutscht. Der Ionentauscher wurde dann noch dreimal mit WFI aufgeschwemmt und abgenutscht.

Der mit Resorufin geladene Ionenaustauscher wurde in eine Probeflasche umgefüllt.

### Beispiel 3

In einem weiteren Ansatz wurden 10 g Gelatine mit 40 g WFI und 5 ml einer ein Molaren Kaliumphosphat Pufferlösung (pH 8,0) verrührt und 20 Minuten zum Quellen stehen gelassen. Anschließend wurden 60 g Glycerol zugegeben, vermischt und im Wasserbad auf 65° Celsius erhitzt. 2 g des mit Resorufin geladenen Ionentauschers Dowex^{®} 1-X8 wurden zugegeben und verrührt. Die Lösung wurde in eine 250 ml Infusionsflasche umgefüllt und für 15 Minuten bei einer 121° Celsius sterilisiert.

Auch nach der Sterilisation blieb der Ionentauscher mit der Gelatine gemischt.

### Beispiel 4

Ein DEAE Sephadex^{®} Ionenaustauscher wurde mit WFI aufgequollen und mit 0,001 %iger Resorufinlösung versetzt. Die Mischung wurde über eine Fritte abgenutscht und das Gemisch mit einem Phosphatpuffer bei einem pH-Wert von 8 gewaschen. Das Gemisch wurde noch mehrmals mit Resorufinlösung gespült, um die Konzentration von Resorufin zu erhöhen. Der stark rosa gefärbte Rückstand wurde in Probegläschen umgefüllt und verschlossen. Von dem Gemisch wurden 6 Proben in kleine Beutel aus Excel-Folie eingeschweißt und jeder Beutel in eine 250 ml Infusionsglasflasche zusammen mit einem Mitsubishi-Absorberbeutel getan. Die Flaschen wurde bei 121° Celsius für 15 Minuten sterilisiert. Nach der Sterilisation blieb die Farbe erhalten. Durch den Sauerstoffabsorber entfärbt sich das Gemisch.

Nach einem Zeitraum von drei Monaten wurden drei Infusionsflaschen geöffnet, in denen je ein Excel-Beutel mit der DEAE Sephadex^{®}-Resorufinmischung enthalten war. Der Excel-Beutel wurde leicht geöffnet, das Gemisch färbte sich sofort violett.

Es wurde außerdem eine weitere Infusionsflasche geöffnet, in der sich über den gleichen Zeitraum eine Kugel aus DEAE Sephadex^{®} Ionenaustauscher beladen mit Resorufin und Puffer bei einem pH von 8 befand. Zusätzlich enthielt das Gemisch noch ca. 40 % Glycerol. Die Kugel färbte sich nach dem Kontakt mit Sauerstoff innerhalb von 5 Minuten stark rosa.

### Beispiel 5

**Tabelle 1**

| | Gelatine | WFI | Citratpuffer pH 4 | Glycerol | Indikator |
|---|---|---|---|---|---|
| Ansatz 5.1 | 20 g | 180 g | 10 g | 10 g | 100 µl 1 %ige MB-Lsg. |
| Ansatz 5.2 | 20 g | 180 g | 10 g | 10 g | 50 µl 1 %ige TB-Lsg. |
| Ansatz 5.3 | 40 g | 180 g | 10 g | 10 g | 100 µl 1 %ige MB-Lsg. |

| | | | | | |
|---|---|---|---|---|---|
| MB- Lsg.= Methylenblaulösung TB- Lsg. = Toluidinblaulösung | | | | | |

Die Gelatine wurde mit WFI und Citratpuffer gemischt und 20 min zum Quellen stehen gelassen. Danach wurde Glycerol zugegeben und alles im Wasserbad auf ca. 65 ° Celsius erwärmt. Anschließend wurde der Indikator zugegeben und vermischt und zum abkühlen aus dem Wasserbad entnommen. Noch vor der Gelierung wurden die Lösungen in jeweils zwei 100 ml Infusionsflaschen umgefüllt, mit einem Stopfen versehen und verbördelt. Je eine Flasche wurde für 10 min bei 121° Celsius sterilisiert, die andere Flasche wurde bei Raumtemperatur stehen gelassen.

Von jedem Ansatz wurde erbsengroße Stücke in jeweils drei 100 ml Infusionsflaschen eingebracht, mit einem Sauerstoffabsorber versehen und die Flaschen mit einem Gummistopfen verschlossen

### Beispiel 6

**Tabelle 2**

| | Gelatine | WFI | Puffer 1M | Glycerol | Indikator |
|---|---|---|---|---|---|
| Ansatz 6.1 | 20 g | 100 g | 20 ml (pH 8) | 60 g | 0.24 g 1 %ige Resorufinlsg. |
| Ansatz 6.2 | 20 g | 100 g | 20 ml (pH 4) | 60 g | 0.595 g 1 %ige MB-Lsg. |
| Ansatz 6.3 | 20 g | 100 g | 20 ml (pH 4) | 60 g | 0.51 g 1 %ige TB-Lsg. |

| | | | | | |
|---|---|---|---|---|---|
| MB- Lsg.= Methylenblaulösung TB- Lsg. = Toluidinblaulösung | | | | | |

Gelatine, WFI und Pufferlösung wurden in einer Fantaschale 20 min zum Quellen stehen gelassen. Danach wurde Glycerol zugegeben und die Mischung im Wasserbad auf ca. 65° Celsius erhitzt. Nach dem Lösen der Gelatine wurde der Indikator tröpfchenweise zugegeben, bis die gewünschte Intensität der Färbung erreicht war. Die Behälter mit Indikator wurden vorher und nachher gewogen, die Differenz war der Verbrauch an Indikatorlösung.

Jeweils 1 ml eines jeden Ansatzes wurden in 6 Excelbeutel eingefüllt und verschweißt. Jeder Beutel wurde in eine 100 ml Infusionsflasche mit einem Sauerstoffabsorber eingebracht, mit Argon begast und verschlossen. Jeweils 3 Flaschen eines Ansatzes wurden für 15 min bei 121 ° Celsius sterilisiert, die anderen 3 Flaschen wurden bei Raumtemperatur gelagert.

### Beispiel 7

**Tabelle 3**

| | HES 200 | WFI | Puffer 1M | Glycerol | Indikator |
|---|---|---|---|---|---|
| Ansatz 7.1 | 75 g | 15 g | 15 ml (pH 8) | 45 g | 0.128 g 1 %ige Resorufinlsg. |
| Ansatz 7.2 | 75 g | 15 g | 15 ml (pH 4) | 45 g | 0.38 g 1 %ige MB-Lsg. |
| Ansatz 7.3 | 75 g | 15 g | 15 ml (pH 4) | 45 g | 0.34 1 %ige TB-Lsg. |

| | | | | | |
|---|---|---|---|---|---|
| MB- Lsg.= Methylenblaulösung TB- Lsg. = Toluidinblaulösung | | | | | |

HES 200 wurde mit Pufferlösung, WFI und Glycerol gemischt. Anschließend wurde jeder Ansatz im Wasserbad auf ca. 80° Celsius erhitzt und verrührt. Nachdem eine homogene Masse entstanden war, wurde der Indikator tropfenweise zugegeben, bis die gewünschte Färbung erreicht war. Die Behälter mit Indikator wurden vorher und nachher gewogen, die Differenz war der Verbrauch am jeweiligen Indikator. Von jedem Ansatz wurde ein Spatellöffel in 6 Excelbeutel eingefüllt und verschweißt. Jeder Beutel wurde in eine 100 ml Infusionsflasche mit einem Sauerstoffabsorber eingebracht, mit Argon begast und verschlossen. Jeweils 3 Flaschen eines Ansatzes wurden für 15 min bei 121° Celsius sterilisiert, die anderen 3 Flaschen wurden bei Raumtemperatur gelagert.

### Beispiel 8

**Tabelle 4**

| | |
|---|---|
| HES 200 | 350 g |
| Lysin HCl | 3 g |
| WFI | 70 g |
| Glycerol | 210 g |

Die Stärke wurde mit Lysin-Hydrochlorid, WFI und Glycerol vermischt und im Wasserbad auf ca. 80° Celsius erhitzt und verrührt, bis eine homogene Masse entstand. Die Temperatur wurde für ca. 2 Stunden konstant gehalten, danach auf Raumtemperatur abgekühlt und über Nacht stehen gelassen.

Das Gemisch wurde kalt in drei Bechergläser aufgeteilt und Indikatorlösung zugegeben.

**Tabelle 5**

| | HES-Lysin Gemisch | Indikator |
|---|---|---|
| Ansatz 8.1 | 113,543 g | 64 mg 1 %ige Resorufinlsg. |
| Ansatz 8.2 | 110,462 g | 169 mg 1 %ige MB-Lsg. |
| Ansatz 8.3 | 109,817 g | 151 mg 1 %ige TB-Lsg. |

| | | |
|---|---|---|
| MB- Lsg.= Methylenblaulösung TB- Lsg. = Toluidinblaulösung | | |

Alle 3 Bechergläser wurden im Wasserbad auf ca. 80° Celsius erhitzt und die Gemische verflüssigt. Danach wurde der Indikator bis zur gewünschten Färbung zugegeben.

Von jedem Ansatz wurde je ein Spatellöffel in 6 Excelbeutel eingefüllt und verschweißt. Jeder Beutel wurde in eine 100 ml Infusionsflasche mit einem Sauerstoffabsorber eingebracht, mit Argon begast und verschlossen. Jeweils 3 Flaschen eines Ansatzes wurden für 15 min bei 121° Celsius erhitzt (sterilisiert), die anderen 3 Flaschen wurden bei Raumtemperatur gelagert.

### Beispiel 9

Aus jedem Ansatz der Beispiele 6, 7 und 8 wurde von jedem Indikatoransatz ein Beutel der wärmebehandelten Variante aus der Flasche genommen. Die Beutel der Gelatineansätze färbten sich nach ca. 30 min. Der Beutel der HES- Ansätze färbten sich erst nach mehreren Stunden.

### Beispiel 10

Um eine mögliche Wiederverwendung des erfindungsgemäßen Sauerstoffindikators zu testen, wurden von den Ansätzen aus den Beispielen 6, 7 und 8 von jedem Indikatoransatz eine bereits wärmebehandelte und eine noch nicht wärmebehandelte Flasche erneut für 15 Minuten bei 121° Celsius erhitzt (sterilisiert).

Auch die am Vortag wärmebehandelten Flaschen wurden geöffnet, die Beutel entnommen, auf eine weiße Oberfläche gelegt und von allen Proben in festgelegten Abständen die Veränderungen notiert.

Die Ergebnisse können der folgendenden Tabelle 6 entnommen werden.

**Tabelle 6**

| | **Zeit (Stunden)** | | | | | |
|---|---|---|---|---|---|---|
| **Ansatz** | **sofort** | **0,5** | **1** | **2** | **7** | **24** |
| Ansatz 6.1; 1 Wärmebehandlung | hellgelb | violett | durchgängig violett | violett noch kräftiger | keine weitere Änderung | keine weitere Änderung |
| Ansatz 6.1; 2 Wärmebehandlungen | hellgelb | Außen violett, innen gelb | Durchgängig violett | violett noch kräftiger | keine weitere Änderung | keine weitere Änderung |
| Ansatz 6.2; 1 Wärmebehandlung | hellgelbhellgrün | Innen gelb, außen hellgrün | Durchgängig blau | keine weitere Änderung | keine weitere Änderung | keine weitere Änderung |
| Ansatz 6.2; 2 Wärmebehandlungen | hellgelbhellgrün | Innen gelb, außen hellgrün | Durchgängig blau | keine weitere Änderung | keine weitere Änderung | keine weitere Änderung |
| Ansatz 6.3; 1 Wärmebehandlung | hellgelb | Innen gelb, außen hellgrün | Durchgängig blau | Blau dunkler als bei Ansatz 6.2 | keine weitere Änderung | keine weitere Änderung |
| Ansatz 6.3; 2 Wärmebehandlungen | hellgelb | Innen gelb, außen | Durchgängig blau | blau dunkler als bei Ansatz 6.2 | keine weitere Änderung | keine weitere Änderung |
| Ansatz 7.1; 1 Wärmebehandlung | gelb | Außen orangerot | Insgesamt etwas dunkler | Außen mehr rot | Innen gelb, außen rot | Innen orange, außen rot kräftiger |
| Ansatz 7.1; 2 Wärmebehandlungen | gelborange | Außen orangerot | Insgesamt etwas dunkler | Außen mehr rot | Innen gelb, außen rot | Innen orange, außen rot kräftiger |
| Ansatz 7.2; 1 Wärmebehandlung | hell - hellgrün | hell - hellgrün | Innen hellgelb, außen hellblau | Fast durchgängig hellblau | Durchgängig blau | Keine weitere Änderung |
| Ansatz 7.2; 2 Wärmebehandlungen | hell - hellgrün | hell - hellgrün | Innen hellgelb, außen hellblau | Fast durchgängig hellblau | Durchgängig blau | Keine weitere Änderung |
| Ansatz 7.3; 1 Wärmebehandlung | hell - hellgelb | hell - hellgelb | hellgelb | Innen hellgelb, außen grünblau | Innen etwas gelb, sonst hellblau | Durchgängig blau |
| Ansatz 7.3; 2 Wärmebehandlungen | hell - hellgelb | hell - hellgelb | hellgelb | Innen hellgelb, außen grünblau | hellblau | Durchgängig blau |
| Ansatz 8.1; 1 Wärmebehandlung | gelb - orange | Dunkel - orange | Außen rot | Außen rot | Innen dunkelorange, außen rot | Innen dunkelorange, außen rot |
| Ansatz 8.1; 2 Wärmebehandlungen | gelb - orange | Dunkel - orange | Außen rot | Außen rot | Innen dunkelorange, außen rot | Innen dunkelorange, außen rot |
| Ansatz 8.2; 1 Wärmebehandlung | hellgelb | hellgelb | Außen grün | Außen grün | hellgrün | grün - hellblau |
| Ansatz 8.2; 2 Wärmebehandlungen | hellgelb | hellgelb | Außen etwas grün | Außen etwas grün | hellgrün | hellgrün |
| Ansatz 8.3; 1 Wärmebehandlung | hellgelb | hellgelb | Außen etwas grünlich | Außen etwas grünlich | hellgrün | Grün - hellblau |
| Ansatz 8.3; 2 Wärmebehandlungen | hellgelb | hellgelb | Außen etwas grünlich | Außen etwas grün | hellgrün | hellgrün |

Auch nach einer zweiten Sterilisation färben sich nach einem Sauerstoffkontakt alle getesteten Sauerstoffindikatoren nach kurzer Zeit. Ein Recycling der erfindungsgemäßen Sauerstoffindikatoren ist demnach möglich.

## Patentansprüche

1. Verwendung von Resorufin und/oder Toluidinblau als organischen Redoxfarbstoff, ein oder mehrere Polyole, insbesondere Glycerol, und Wasser, eingearbeitet in Gelatine und/oder Hydroxyethylstärke und/oder Methylcellulose als Hilfsstoffe als Sauerstoffindikator.

2. Verwendung gemäß Anspruch 1 umfassend weiterhin einen organischen oder anorganischen Puffer.

3. Verwendung gemäß Anspruch 2 **dadurch gekennzeichnet, dass** der Puffer ein Phosphat- und/oder Citratpuffer ist.

4. Verwendung gemäß Anspruch 2 oder 3 **dadurch gekennzeichnet, dass** der Puffer ein Phosphat- und/oder Citratpuffer ist und in einer Konzentration von 0,001 bis 2 Mol, insbesondere 0,01 bis 1 Mol bezogen auf den Sauerstoffindikator enthalten ist.

5. Verwendung gemäß einem der Ansprüche 1 bis 4 **dadurch gekennzeichnet, dass** im Falle der Anwesenheit von Resorufin der pH-Wert in einem Bereich von 6 bis 10, insbesondere 7 bis 9, insbesondere 7,5 bis 8,5 liegt.

6. Verwendung gemäß einem der Ansprüche 1 bis 4 **dadurch gekennzeichnet, dass** im Falle der Anwesenheit **von** Toluidinblau der pH-Wert in einem Bereich von 2 bis 6, insbesondere 3 bis 5, insbesondere 3,5 bis 4,5 liegt.

7. Verwendung gemäß einem der Ansprüche 1 bis **6 dadurch gekennzeichnet, dass** er ein Trägermaterial umfasst, insbesondere Ionentauscher, Papier oder Folie.

8. Verwendung gemäß Anspruch **7 dadurch gekennzeichnet, dass** der Ionentauscher ein Anionen- oder Kationentauscher auf Polymerbasis oder ein polymeres Kohlenhydratderivat umfasst.

9. Verwendung gemäß einem der Ansprüche 1 bis **8** in Form einer Tablette, Kapsel oder als Gel und/oder eingebracht in eine separate Umverpackung, bevorzugt einen Beutel oder Blister.

10. Verwendung gemäß einem der Ansprüche 1 bis **9 dadurch gekennzeichnet, dass** der Redoxfarbstoff in der reduzierten Form enthalten ist.

11. Verwendung gemäß Anspruch **10 dadurch gekennzeichnet, dass** der Redoxfarbstoff mit einem Reduktionsmittel mit einem höheren Reduktionspotential als der Farbstoff selbst, insbesondere Glucose, Natriumdisulfit, Zink, MnCl₂, N-Acetylcystein und/oder Ascorbinsäure, behandelt wird.

12. Verwendung gemäß einem der Ansprüche 1 bis **11 dadurch gekennzeichnet, dass** die reduzierte Form des Redoxfarbstoffs Schutzgruppen aufweist, die sich bei Temperaturbehandlung abspalten.

13. Verwendung gemäß Anspruch **12 dadurch gekennzeichnet, dass** die Schutzgruppe eine Benzoylgruppe enthält.

14. Verwendung gemäß einem der Ansprüche 1 bis **9 dadurch gekennzeichnet, dass** der Redoxfarbstoff in seiner oxidierten Form enthalten ist und eine Reduktion während einer Temperaturbehandlung erfährt.

15. Verwendung gemäß einem der Ansprüche 1 bis **14 zur Überwachung von parenteralen** und enteralen Applikationsformen.

16. Verwendung nach Anspruch **15** im räumlichen Bereich zwischen einem Beutel zur parenteralen und enteralen Ernährung und einem Umbeutel.

17. Verwendung gemäß Anspruch **15** oder **16** in Form von Tabletten, Kapseln oder aufgebracht auf Folie oder Papier oder in einem Beutel oder Blister.

## Claims

1. Use of resorufin and/or toluidine blue as organic redox dyes, one or more polyols, especially glycerol, and water, incorporated as auxiliary agents into gelatin and/or hydroxyethyl starch and/or methylcellulose, as an oxygen indicator.

2. The use according to claim 1, further comprising an organic or inorganic buffer.

3. The use according to claim 2, **characterized in that** said buffer is a phosphate and/or citrate buffer.

4. The use according to claim 2 or 3, **characterized in that** said buffer is a phosphate and/or citrate buffer contained at a concentration of from 0.001 to 2 mol, especially from 0.01 to 1 mol, based on the oxygen indicator.

5. The use according to any of claims 1 to 4, **characterized in that** the pH is within a range of from 6 to 10, especially from 7 to 9, especially from 7.5 to 8.5, in a case where resorufin is present.

6. The use according to any of claims 1 to 4, **characterized in that** the pH is within a range of from 2 to 6, especially from 3 to 5, especially from 3.5 to 4.5, in a case where toluidine blue is present.

7. The use according to any of claims 1 to 6, **characterized by** comprising a support material, especially an ion exchanger, paper or sheet.

8. The use according to claim 7, **characterized in that** said ion exchanger comprises a polymer-based anion or cation exchanger or a polymeric carbohydrate derivative.

9. The use according to any of claims 1 to 8 in the form of a tablet, capsule or gel, and/or placed into a separate outer packaging, preferably a bag or blister pack.

10. The use according to any of claims 1 to 9, **characterized in that** said redox dye is contained in its reduced form.

11. The use according to claim 10, **characterized in that** said redox dye is treated with a reducing agent having a higher reduction potential than that of the dye itself, especially glucose, sodium disulfite, zinc, MnCl₂, N-acetylcysteine and/or ascorbic acid.

12. The use according to any of claims 1 to 11, **characterized in that** the reduced form of the redox dye has protecting groups that will cleave off during a temperature treatment.

13. The use according to claim 12, **characterized in that** said protecting group contains a benzoyl group.

14. The use according to any of claims 1 to 9, **characterized in that** said redox dye is contained in its oxidized form and is subjected to reduction during a temperature treatment.

15. The use according to any of claims 1 to 14 for monitoring of parenteral and enteral dosage forms.

16. The use according to claim 15 in the space between a bag for parenteral and enteral nutrition and a surrounding bag.

17. The use according to claim 15 or 16 in the form of tablets, capsules, or applied to a sheet or paper, or in a bag or blister pack.

## Revendications

1. Utilisation de la résorufine et/ou du bleu de toluidine comme colorant redox organique, d'un ou plusieurs polyols, notamment le glycérol, et de l'eau, incorporés dans de la gélatine et/ou de l'hydroxyéthylamidon et/ou de la méthylcellulose comme agents auxiliaires, en tant qu'indicateur d'oxygène.

2. Utilisation selon la revendication 1, comprenant en outre un tampon organique ou inorganique.

3. Utilisation selon la revendication 2, **caractérisée en ce que** le tampon est un tampon phosphate et/ou citrate.

4. Utilisation selon la revendication 2 ou 3, **caractérisée en ce que** le tampon est un tampon phosphate et/ou citrate contenu en une concentration de 0,001 à 2 moles, notamment de 0,01 à 1 mole, par rapport à l'indicateur d'oxygène.

5. Utilisation selon l'une quelconque des revendications 1 à 4, **caractérisée en ce que** le pH est compris entre 6 et 10, notamment entre 7 et 9, notamment entre 7,5 et 8,5, dans le cas de présence de la résorufine.

6. Utilisation selon l'une quelconque des revendications 1 à 4, **caractérisée en ce que** le pH est compris entre 2 et 6, notamment entre 3 et 5, notamment entre 3,5 et 4,5, dans le cas de présence du bleu de toluidine.

7. Utilisation selon l'une quelconque des revendications 1 à 6, **caractérisée en ce qu'**il comprend un matériau de support, notamment un échangeur d'ions, du papier ou une feuille.

8. Utilisation selon la revendication 7, **caractérisée en ce que** ledit échangeur d'ions comprend un échangeur d'anions ou de cations à base de polymère ou un dérivé d'hydrate de carbone polymère.

9. Utilisation selon l'une quelconque des revendications 1 à 8 sous forme de comprimé, de capsule ou de gel, et/ou introduit dans un emballage extérieur séparé, de préférence un sac ou un emballage blister.

10. Utilisation selon l'une quelconque des revendications 1 à 9, **caractérisée en ce que** ledit colorant redox est contenu sous sa forme réduite.

11. Utilisation selon la revendication 10, **caractérisée en ce que** ledit colorant redox est traité avec un agent réducteur ayant un potentiel de réduction supérieur à celui du colorant lui-même, notamment le glucose, le disulfite de sodium, le zinc, le MnCl₂, la N-acétylcystéine et/ou l'acide ascorbique.

12. Utilisation selon l'une quelconque des revendications 1 à 11, **caractérisée en ce que** la forme réduite du colorant redox présente des groupes protecteurs qui sont éliminés lors d'un traitement thermique.

13. Utilisation selon la revendication 12, **caractérisée en ce que** ledit groupe protecteur contient un groupe benzoyle.

14. Utilisation selon l'une quelconque des revendications 1 à 9, **caractérisée en ce que** ledit colorant redox est contenu sous sa forme oxydée et subit une réduction lors d'un traitement thermique.

15. Utilisation selon l'une quelconque des revendications 1 à 14 pour let contrôle des formes d'administration parentérales et entérales.

16. Utilisation selon la revendication 15 à l'intérieur de l'espace entre un sac pour l'alimentation parentérale et entérale et un sac extérieur.

17. Utilisation selon la revendication 15 ou 16 sous forme de comprimé, de capsule, ou appliqué sur une feuille ou du papier, ou dans un sac ou emballage blister.
